(19) Europäisches Patentamt
European Patent Office
Office européen des brevets

(11) EP 4 723 195 A1

(12) **EUROPEAN PATENT APPLICATION**
published in accordance with Art. 153(4) EPC

(43) Date of publication:
**08.04.2026 Bulletin 2026/15**

(21) Application number: **24815167.2**

(22) Date of filing: **13.05.2024**

(51) International Patent Classification (IPC):
***H01M 4/131*** *(2010.01)* ***H01M 4/36*** *(2006.01)*
***H01M 4/505*** *(2010.01)* ***H01M 4/525*** *(2010.01)*
***H01M 4/62*** *(2006.01)*

(52) Cooperative Patent Classification (CPC):
Y02E 60/10

(86) International application number:
**PCT/JP2024/017592**

(87) International publication number:
**WO 2024/247683 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.05.2023 JP 2023089235**

(71) Applicant: **Panasonic Intellectual Property Management Co., Ltd.**
**Kadoma-shi, Osaka 571-0057 (JP)**

(72) Inventors:
- **MINEGISHI, Shuya**
  **Kadoma-shi, Osaka 571-0057 (JP)**
- **UKA, Youichirou**
  **Kadoma-shi, Osaka 571-0057 (JP)**
- **OKAZAKI, Tomohisa**
  **Kadoma-shi, Osaka 571-0057 (JP)**
- **KAWAKITA, Akihiro**
  **Kadoma-shi, Osaka 571-0057 (JP)**
- **OGASAWARA, Takeshi**
  **Kadoma-shi, Osaka 571-0057 (JP)**

(74) Representative: **Novagraaf International SA**
**Chemin de l'Echo 3**
**1213 Onex, Geneva (CH)**

(54) **POSITIVE ELECTRODE FOR NONAQUEOUS ELECTROLYTE SECONDARY BATTERY, AND NONAQUEOUS ELECTROLYTE SECONDARY BATTERY**

(57) A positive electrode (11) for a nonaqueous electrolyte secondary battery according to one embodiment of the present disclosure has a positive electrode core body (30), and a positive electrode mixture layer (31) formed on the surface of the positive electrode core body, the positive electrode being characterized in that: the positive electrode mixture layer (31) includes a lithium-containing transition metal composite oxide as a positive electrode active material; a sulfonic acid compound represented by formula (I) is present on the particle surface of the lithium-containing transition metal composite oxide; and when the positive electrode mixture layer (31) is divided into two equal parts in the thickness direction, a region on the positive electrode core body (30) side of the positive electrode mixture layer (31) is defined as a first region (31a), and a region on the front surface side of the positive electrode mixture layer (31) is defined as a second region (31b), the content of the sulfonic acid compound in the second region (31b) is greater than the content of the sulfonic acid compound in the first region (31a). (In the formula, A represents a Group 1 element or a Group 2 element, R represents a hydrocarbon group, and n is 1 or 2.)

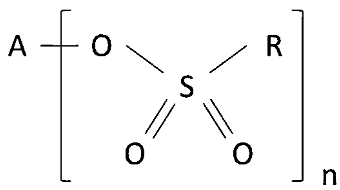

(I)

EP 4 723 195 A1

Figure 2

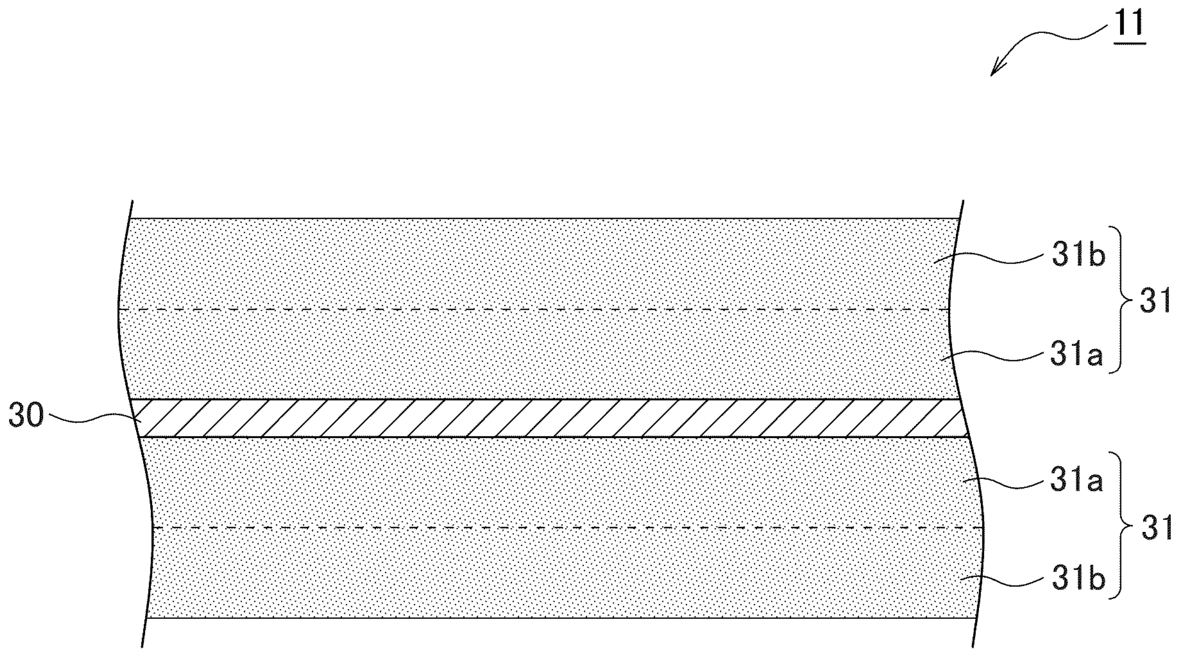

## Description

TECHNICAL FIELD

The present disclosure relates to a positive electrode for a non-aqueous electrolyte secondary battery and a non-aqueous electrolyte secondary battery using the positive electrode.

BACKGROUND ART

In recent years, applications of non-aqueous electrolyte secondary batteries have expanded to power sources for electric vehicles and power storage devices for utilizing renewable natural energy. Since positive electrodes significantly affect battery characteristics, such as battery capacity, output characteristics, and cycle characteristics, many studies have been made on the positive electrode. For example, Patent Literature 1 discloses a positive electrode for a non-aqueous electrolyte secondary battery using a lithium-containing transition metal composite oxide with low soluble Li salts scattered on the surface as a positive electrode active material for the purpose of reducing the reaction resistance when stored at high temperatures.

CITATION LIST

PATENT LITERATURE

PATENT LITERATURE 1: Japanese Unexamined Patent Application Publication No. 2019-169286

SUMMARY

In a non-aqueous electrolyte secondary battery, it is an important object to improve output characteristics at a low temperature. Conventional techniques described in Patent Literature 1 have not sufficiently achieved this object, and there is still much room for improvement.

The positive electrode for a non-aqueous electrolyte secondary battery in one aspect of the present disclosure includes a positive electrode for a non-aqueous electrolyte secondary battery, having a positive electrode core and a positive electrode mixture layer formed on a surface of the positive electrode core, wherein the positive electrode mixture layer includes a lithium-containing transition metal composite oxide as a positive electrode active material, a sulfonate compound represented by formula (I) is present on surfaces of particles of the lithium-containing transition metal composite oxide, and when the positive electrode mixture layer is divided into two equal parts in a thickness direction to define a region on a positive electrode core side of the positive electrode mixture layer as a first region and a region on a surface side of the positive electrode mixture layer as a second region, a content ratio of the sulfonate compound in the second region is higher than a content ratio of the sulfonate compound in the first region,

[Formula 1]

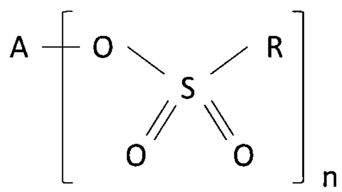

(I)

wherein A represents a group I or group II element, R represents a hydrocarbon group, and n represents 1 or 2.

The non-aqueous electrolyte secondary battery in one aspect of the present disclosure comprises the positive electrode, a negative electrode, and a non-aqueous electrolyte.

According to the positive electrode for a non-aqueous electrolyte secondary battery in one aspect of the present disclosure, a non-aqueous electrolyte secondary battery having improved output characteristics at a low temperature can be provided.

BRIEF DESCRIPTION OF DRAWING

FIG. 1 is a view schematically illustrating an axial cross-section of a non-aqueous electrolyte secondary battery (cylindrical battery) as an example of an embodiment.

FIG. 2 is a sectional view of a positive electrode as an example of an embodiment.

DESCRIPTION OF EMBODIMENTS

As a result of studies conducted by the present inventors, it has been revealed that the presence of a sulfonate compound represented by formula (I) above on the surfaces of particles of the lithium-containing transition metal composite oxide used as a positive electrode active material facilitates the insertion and extraction of Li, thereby reducing the reaction resistance in the positive electrode.

It has been found that when the positive electrode mixture layer is divided into two equal parts in the thickness direction to define a region on the positive electrode core side as a first region and a region on the surface side as a second region, the content ratio of the sulfonate compound in the second region is made higher than the content ratio of the sulfonate compound in the first region, thereby improving the output characteristics at a low temperature. Since the diffusivity of the non-aqueous electrolyte decreases at low temperatures, the reaction on the surface side of the positive electrode becomes more prominent than the reaction on the core side of the positive electrode. Therefore, the presence of a large amount of the sulfonate compound on the surface side of the positive electrode can further reduce the reaction resistance on the surface side of the positive electrode, thereby improving the output characteristics at a low temperature. When the content ratio of the sulfonate compound is increased throughout the entire positive electrode mixture layer, the electron resistance of the entire positive electrode increases, resulting in no improvement in the output characteristics at a low temperature. In addition, when the content ratio of the sulfonate compound is reduced throughout the entire positive electrode mixture layer, the effect of reducing the reaction resistance of the positive electrode by the sulfonate compound is insufficient, and the effect of improving the output characteristic at a low temperature cannot be obtained.

Hereinafter, one aspect of an embodiment of the positive electrode for a non-aqueous electrolyte secondary battery, and a nonaqueous electrolyte secondary battery using the positive electrode according to the present disclosure will be described in detail with reference to the drawings. Note that the scope of the present disclosure includes a form composed of selective combination of constituents of a plurality of embodiments and modified examples described below.

Hereinafter, a cylindrical battery including a wound electrode assembly 14 accommodated in a bottomed cylindrical outer case 16 will be illustrated as the non-aqueous electrolyte secondary battery, but the outer case of the battery is not limited to a cylindrical outer case. The non-aqueous electrolyte secondary battery according to the present disclosure may be, for example, a rectangular battery comprising a rectangular outer case, a coin-type battery comprising a coin-shaped outer case, or a pouch battery comprising an outer case constituted by a laminated sheet including a metal layer and a resin layer. The electrode assembly is not limited to the wound-type, and may be a laminate electrode assembly in which a plurality of positive electrodes and a plurality of negative electrodes are alternately stacked one by one via separators. In addition, the design of the non-aqueous electrolyte secondary battery according to the present disclosure is not limited to the design of the illustrated non-aqueous electrolyte secondary battery, and a known non-aqueous electrolyte secondary battery design may be applied.

FIG. 1 is an axial sectional view of a cylindrical non-aqueous electrolyte secondary battery 10 as an example of an embodiment. As shown in FIG. 1, the non-aqueous electrolyte secondary battery 10 comprises a wound electrode assembly 14, a non-aqueous electrolyte, and an outer case 16 that houses the electrode assembly 14 and the non-aqueous electrolyte. The electrode assembly 14 includes a positive electrode 11, a negative electrode 12, and a separator 13 and has the positive electrode 11 and the negative electrode 12 being wound with the separator 13. The outer case 16 is a bottomed cylindrical metal container having an opening on one side in the axial direction, and the opening of the outer case 16 is closed off by a sealing assembly 17. Hereinafter, for convenience of explanation, the sealing assembly 17 side of the battery is described as the top, and the bottom side of the outer case 16 is described as the bottom.

The positive electrode 11, the negative electrode 12, and the separator 13, which constitute the electrode assembly 14, are all elongated rectangular members, and are alternately laminated in the radial direction of the electrode assembly 14 by being spirally wound in the longitudinal direction. The separator 13 isolates the positive electrode 11 from the negative electrode 12. The two separators 13 are, for example, disposed so as to sandwich the positive electrode 11. The electrode assembly 14 comprises a positive electrode lead 20 connected to the positive electrode 11 by means of welding or the like, and a negative electrode lead 21 connected to the negative electrode 12 by means of welding or the like. In the electrode assembly 14, the longitudinal direction of the positive electrode 11 and the negative electrode 12 corresponds to the winding direction, while the transverse direction of the positive electrode 11 and the negative electrode 12 corresponds to the axial direction. That is, end surfaces of the positive electrode 11 and the negative electrode 12 in the

transverse direction form end surfaces of the electrode assembly 14 in the axial direction.

Insulating plates 18 and 19 are respectively arranged above and below the electrode assembly 14. In the example illustrated in FIG. 1, the positive electrode lead 20 extends through a through-hole in the insulating plate 18 to the side of the sealing assembly 17, and the negative electrode lead 21 extends outside the insulating plate 19 to the side of the bottom of the outer case 16. The positive electrode lead 20 is connected to the lower surface of an internal terminal plate 23 of the sealing assembly 17, by means of welding or the like, and a cap 27, the top plate of the sealing assembly 17 electrically connected to the internal terminal plate 23, serves as a positive electrode terminal. The negative electrode lead 21 is connected to the inner surface of the bottom of the outer case 16 by means of welding or the like, and the outer case 16 serves as a negative electrode terminal.

A gasket 28 is provided between the outer case 16 and the sealing assembly 17 to ensure that the interior of the battery is tightly sealed. The outer case 16 includes a grooved portion 22 formed to have a part of a side surface portion projected inward and support the sealing assembly 17. The grooved portion 22 is preferably annularly formed along the peripheral direction of the outer case 16, supporting the sealing assembly 17 by the upper surface thereof. The sealing assembly 17 is fixed to an upper part of the outer case 16 by means of the grooved portion 22 and an opening end portion of the outer case 16 which is crimped to the sealing assembly 17.

The sealing assembly 17 has a structure in which an internal terminal plate 23, a lower vent member 24, an insulating member 25, an upper vent member 26, and a cap 27 are layered in the order from the side of the electrode assembly 14. The members forming the sealing assembly 17 each have, for example, a disk shape or a ring shape, and the members except for the insulating member 25 are each electrically connected to one another. The lower vent member 24 and the upper vent member 26 are connected at each center part, and the insulating member 25 is interposed between the peripheral edges of the vent members. When the internal pressure of the battery rises due to abnormal heat generation, the lower vent member 24 deforms and breaks so as to push up the upper vent member 26 toward the side of the cap 27, and the current path between the lower vent member 24 and the upper vent member 26 is disconnected. When the internal pressure further increases, the upper vent member 26 breaks to emit gas from the opening portion of the cap 27.

Hereinafter, the positive electrode 11, the negative electrode 12, the separator 13, and the non-aqueous electrolyte, all of which constitute the non-aqueous electrolyte secondary battery 10, particularly, the positive electrode 11, will be described in detail with further reference to FIG. 2. FIG. 2 is a view schematically depicting a cross section of the positive electrode 11.

[Positive Electrode]

As shown in FIGS. 1 and 2, the positive electrode 11 has a positive electrode core 30 and a positive electrode mixture layer 31 formed on the surface of the positive electrode core 30. The positive electrode mixture layer 31 is preferably formed on each of both surfaces of the positive electrode core 30. As the positive electrode core 30, a foil of a metal that is stable in the potential range of the positive electrode 11, such as aluminum or an aluminum alloy, and a film with the metal disposed on the surface layer, or the like can be used. The thickness of the positive electrode core 30 is, for example, greater than or equal to 10 μm and less than or equal to 30 μm. The positive electrode mixture layer 31 includes, for example, a positive electrode active material, a conductive auxiliary agent, and a binder. The positive electrode mixture layer 31 is preferably provided on each of both surfaces of the positive electrode core 30, excluding a portion to which the positive electrode lead 20 is connected.

The basis weight of the positive electrode mixture layer 31 is, for example, greater than or equal to 250 $g/m^2$. In this case, it is possible to remarkably exhibit the effect of the present disclosure while achieving high capacity of the non-aqueous electrolyte secondary battery. From the viewpoint of increasing the capacity of a battery, the basis weight of the positive electrode mixture layer 31 may be greater than or equal to 300 $g/m^2$ or greater than or equal to 350 $g/m^2$. The upper limit of the basis weight of the positive electrode mixture layer 31 is, for example, 600 $g/m^2$ from the viewpoint of cycle characteristics. Thus, one example of a preferred range for the basis weight of the positive electrode mixture layer 31 is greater than or equal to 250 $g/m^2$ and less than or equal to 600 $g/m^2$. The thickness of the positive electrode mixture layer 31 is greater than or equal to 10 μm and less than or equal to 200 μm, for example, on one side of the positive electrode core 30.

The positive electrode 11 includes a lithium-containing transition metal composite oxide as a positive electrode active material. The lithium-containing transition metal composite oxide includes, for example, secondary particles each formed by aggregation of primary particles. The particle diameter of the primary particles forming the secondary particles of the lithium-containing transition metal composite oxide is, for example, greater than or equal to 0.02 μm and less than or equal to 2 μm. The particle diameter of the primary particles is measured as the diameter of a circumscribed circle in particle images observed by scanning electron microscopy (SEM). The average particle diameter of the secondary particles of the lithium-containing transition metal composite oxide is, for example, greater than or equal to 2 μm and less than or equal to 30 μm. As used herein, the average particle diameter refers to the volume-based median diameter (D50). The D50 means the particle diameter at which the cumulative frequency in the volume-based particle size distribution

reaches 50% from the smaller particle side, which is also referred to as the median diameter. The particle size distribution of the secondary particles of the lithium-containing transition metal composite oxide can be measured using a laser diffraction particle size distribution measuring device (e.g., MT3000II, manufactured by MicrotracBEL Corp.), with water used as the dispersion medium.

The lithium-containing transition metal composite oxide, for example, has a layered structure. Examples of the layered structures of the lithium-containing transition metal composite oxide include a layered structure belonging to the space group R-3m and a layered structure belonging to the space group C2/m. From the viewpoint of high capacity, stability of the crystal structure, and the like, the lithium-containing transition metal composite oxide preferably has a layered structure belonging to the space group R-3m. The layered structure of the lithium-containing transition metal composite oxide may include a transition metal layer and a Li layer.

The lithium-containing transition metal composite oxide contains greater than or equal to 50 mol% of Ni relative to the total molar amount of metal elements excluding Li, and one or more elements selected from the group consisting of Co, Mn, and Al.

The content ratio of Ni in the lithium-containing transition metal composite oxide is greater than or equal to 50 mol% relative to the total molar amount of metal elements excluding Li. Thus, the battery capacity can be increased. The content ratio of Ni may be greater than or equal to 75 mol%, greater than or equal to 80 mol%, preferably greater than or equal to 85 mol%, and more preferably greater than or equal to 90 mol%. From the viewpoint of stability of the structure, the content ratio of Ni is preferably less than or equal to 99 mol%, and more preferably less than or equal to 95 mol%.

The content ratio of Co in the lithium-containing transition metal composite oxide is greater than or equal to 0 mol% and less than or equal to 15 mol% relative to the total molar amount of metal elements excluding Li, and Co is an optional component. In other words, the lithium-containing transition metal composite oxide may not contain Co. The lithium-containing transition metal composite oxide may improve the heat resistance of the battery by containing Co.

The content ratio of Mn in the lithium-containing transition metal composite oxide is greater than or equal to 0 mol% and less than or equal to 50 mol%, and Mn is an optional component relative to the total molar amount of metal elements excluding Li. In other words, the lithium-containing transition metal composite oxide may not contain Mn. The lithium-containing transition metal composite oxide may stabilize the crystal structure by containing Mn.

The content ratio of Al in the lithium-containing transition metal composite oxide is greater than or equal to 0 mol% and less than or equal to 15 mol% relative to the total molar amount of metal elements excluding Li, and Al is an optional component. In other words, the lithium-containing transition metal composite oxide may be free of Al.

The total content ratio of Co, Mn, and Al in the lithium-containing transition metal composite oxide is, for example, greater than or equal to 0 mol% and less than or equal to 50 mol%.

The lithium-containing transition metal composite oxide may further include one or more elements selected from the group consisting of W, Mg, Mo, Nb, Ti, Si, Ca, Sr, and Zr. The content ratio of each of W, Mg, Mo, Nb, Ti, Si, Ca, Sr, and Zr in the lithium-containing transition metal composite oxide is, for example, greater than or equal to 0 mol% and less than or equal to 1 mol% relative to the total molar amount of metal elements excluding Li. The total content ratio of W, Mg, Mo, Nb, Ti, Si, Ca, Sr, and Zr is, for example, greater than or equal to 0 mol% and less than or equal to 2 mol%.

The lithium-containing transition metal composite oxide may be, for example, a composite oxide represented by the general formula $Li_xNi_aM1_8M2_cO_{2-y}$, wherein $0.8 < x < 1.2$, $0.5 \leq a$, $0 \leq b \leq 0.5$, $0 \leq c \leq 0.02$, $0 \leq y < 0.05$, $a + b + c = 1$, M1 represents one or more elements selected from the group consisting of Co, Mn, and Al, and M2 represents one or more elements selected from the group consisting of W, Mg, Mo, Nb, Ti, Si, Ca, Sr, and Zr.

The content ratio of elements constituting the lithium-containing transition metal composite oxide can be measured using an inductively coupled plasma atomic emission spectrometer (ICP-AES), an electron probe microanalyzer (EPMA), an energy dispersive X-ray spectrometer (EDX), or the like. Note that the composition of the lithium-containing transition metal composite oxide in the first region 31a (see FIG. 2) and the second region 31b (see FIG. 2) described later may be the same or different from each other.

A sulfonate compound represented by formula (I) is present on the surfaces of the particles of the lithium-containing transition metal composite oxide:

[Formula 2]

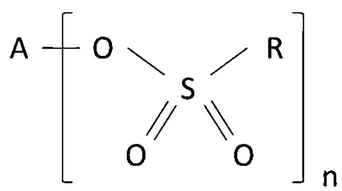

(I)

wherein A represents a group I or group II element, R represents a hydrocarbon group, and n represents 1 or 2. A preferably represents a group I element. Especially, Li or Na is more preferable, and Li is particularly preferable. The sulfonate compound may be scattered so as to cover at least a part of the surfaces of the secondary particles of the lithium-containing transition metal composite oxide or may be present so as to cover the entire surface of the secondary particles. The sulfonate compound may be fixed to the surfaces of the primary particles of the lithium-containing transition metal composite oxide.

In formula (I), R preferably represents an alkyl group. The number of carbon atoms in the alkyl group is preferably less than or equal to 5, and more preferably less than or equal to 3. From the viewpoint of reducing the reaction resistance and the like, a preferred example of R is an alkyl group having less than or equal to 3 carbon atoms, and especially, R preferably represents a methyl group. Note that a part of carbon-bonded hydrogens in R may be substituted with fluorine. In addition, n in formula (I) is preferably 1.

Specific examples of the sulfonate compound include lithium methanesulfonate, lithium ethanesulfonate, lithium propanesulfonate, sodium methanesulfonate, sodium ethanesulfonate, magnesium methanesulfonate, and lithium fluoromethanesulfonate. Especially, at least one selected from the group consisting of lithium methanesulfonate, lithium ethanesulfonate, and sodium methanesulfonate is preferable, and lithium methanesulfonate is particularly preferable.

As shown in FIG. 2, when the positive electrode mixture layer 31 is divided into two equal parts in the thickness direction to define a region on a positive electrode core 30 side of the positive electrode mixture layer 31 as a first region 31a and a region on a surface side of the positive electrode mixture layer 31 as a second region 31b, the content ratio (Y) of the sulfonate compound in the second region 31b is higher than the content ratio (X) of the sulfonate compound in the first region 31a. In this case, the reaction resistance on the surface side of the positive electrode 11 can be further reduced, and the output characteristics of the battery can be improved at a low temperature when the diffusivity of the non-aqueous electrolyte is reduced. Furthermore, if the sulfonate compound is present on the surfaces of the particles, the electronic conductivity of the lithium-containing transition metal composite oxide decreases. Therefore, the deterioration of the conductivity of the positive electrode mixture layer 31 is suppressed by decreasing the content ratio (X) of the sulfonate compound in the first region 31a. As a result, the output characteristics of the battery at a low temperature can be improved.

The ratio (Y/X) of the content ratio (Y) of the sulfonate compound in the second region 31b to the content ratio (X) of the sulfonate compound in the first region 31a preferably satisfies $1 < (Y/X) \leq 10$, more preferably $1.5 \leq (Y/X) \leq 10$, still more preferably $1.5 \leq (Y/X) \leq 8$, and particularly preferably $2 \leq (Y/X) \leq 8$. When (Y/X) is larger than 10, the conductivity of the positive electrode mixture layer 31 may decrease, resulting in a decrease in the output characteristic of the battery at a low temperature.

The content ratio (X) of the sulfonate compound in the first region 31a may be greater than or equal to 0 mass% and less than or equal to 0.7 mass%, greater than or equal to 0 mass% and less than or equal to 0.6 mass%, greater than or equal to 0.1 mass% and less than or equal to 0.7 mass%, or greater than or equal to 0.1 mass% and less than or equal to 0.6 mass% relative to the total mass of the positive electrode active material in the first region 31a. The content ratio (X) of the sulfonate compound in the first region 31a is preferably greater than or equal to 0 mass% and less than or equal to 0.5 mass%, more preferably greater than or equal to 0 mass% and less than or equal to 0.4 mass%, and still more preferably greater than or equal to 0 mass% and less than or equal to 0.3 mass%, relative to the total mass of the positive electrode active material in the first region 31a. In other words, the first region 31a may not include a sulfonate compound. The content ratio (Y) of the sulfonate compound in the second region 31b may be greater than or equal to 0,3 mass% and less than or equal to 2.5 mass%, greater than or equal to 0,3 mass% and less than or equal to 2.3 mass%, greater than or equal to 0.5 mass% and less than or equal to 2.5 mass%, or greater than or equal to 0.5 mass% and less than or equal to 2.3 mass% relative to the total mass of the positive electrode active material in the second region 31b. The content ratio (Y) of the sulfonate compound in the second region 31b is preferably greater than or equal to 0.3 mass% and less than or equal to 2.0 mass%, more preferably greater than or equal to 0.5 mass% and less than or equal to 2.0 mass%, still more preferably greater than or equal to 0.3 mass% and less than or equal to 1.5 mass%, and particularly preferably greater than or equal to 0.5 mass% and less than or equal to 1.5 mass%, relative to the total mass of the positive electrode active material in the second region 31b. The content ratio (X) of the sulfonate compound in the first region 31a and the content ratio (Y) of the sulfonate compound in the second region 31b can be selectively combined within the ranges described above.

The presence of the sulfonate compound on the surfaces of the particles of the lithium-containing transition metal composite oxide can be confirmed by Fourier transform infrared spectroscopy (FT-IR). In an infrared absorption spectrum obtained by FT-IR, the positive electrode active material including lithium methanesulfonate, for example, have absorption peaks near 1238 $cm^{-1}$, 1175 $cm^{-1}$, 1065 $cm^{-1}$, and 785 $cm^{-1}$. The peaks near 1238 $cm^{-1}$, 1175 $cm^{-1}$, and 1065 $cm^{-1}$ are peaks caused by SO stretching vibration derived from lithium methanesulfonate. The peak near 785 $cm^{-1}$ is an peak caused by CS stretching vibration derived from lithium methanesulfonate. In addition, the presence of a positive electrode active material including a sulfonate compound other than lithium methanesulfonate can be confirmed from the absorption peak derived from the sulfonate compound in the infrared absorption spectrum.

The presence of the sulfonate compound can also be confirmed by X-ray photoelectron spectroscopy (XPS). In the spectrum obtained by XPS, the positive electrode active material including lithium methanesulfonate exhibits a peak

with a binding energy in the vicinity of greater than or equal to 165 eV and less than or equal to 170 eV and an intensity (c/s) of greater than or equal to 200 and less than or equal to 1000. The presence of the sulfonate compound on the surfaces of the particles of the lithium-containing transition metal composite oxide can be confirmed by ICP, atomic absorption spectrometry, radiation XRD measurement, TOF-SIMS, H-NMR, or the like.

The content ratio of the sulfonate compound can be quantified, for example, by quantitatively analyzing the sulfur element (S) and the transition metal elements using an ICP atomic emission spectrometer (ICP-AES), and converting the proportions thereof.

On the surface of the secondary particles of the lithium-containing transition metal composite oxide, a metal compound may be present in addition to the sulfonate compound. The metal compound includes, for example, one or more metal elements selected from the group consisting of Sr, Ca, W, Zr, rare earths, and Al. Examples of the Sr-containing compound include SrO, $Sr(OH)_2$, and $SrCO_3$. Examples of the compound containing Ca include CaO, $Ca(OH)_2$, and $CaCO_3$. Examples of the compound containing W include $WO_3$. Examples of the compound containing Al include $Al_2O_3$. Examples of the Zr-containing compound include $ZrO_2$, $Zr(OH)_4$, $Zr(CO_3)_2$, and $Zr(SO_4)_2 \cdot 4H_2O$. Examples of the compound containing rare-earth include oxides, hydroxides, carbonates, sulfates, nitrates, and phosphates of rare earths. The metal compound may contain a plurality of these metal elements, and examples thereof include $SrAlO_4$, and $CaAlO_4$. The metal compound may further contain Li, and examples thereof include lithium tungstate.

A non-metal compound may be present on the surfaces of the lithium-containing transition metal composite oxide. The non-metal compound includes, for example, one or more non-metal elements selected from the group consisting of P and B. Examples of the compound containing P include $Li_{3-x}H_xPO_4$ ($0 \leq x \leq 3$). Examples of the compound containing B include $H_3BO_3$, $Li_3BO_3$, and $Li_2B_4O_7$.

The positive electrode active material as an example of an embodiment can be produced by the method described below. Note that the production method described herein is merely an example, and the production method of the positive electrode active material is not limited to this method.

The production process of the positive electrode active material includes a synthesis step of obtaining a lithium-containing transition metal composite oxide, a washing step of washing the fired product with water and dehydrating the washed product to obtain a cake-like composition, a drying step of drying the cake-like composition to obtain a powder-like composition, and an addition step of adding at least one of the group consisting of a sulfonate compound and a sulfonic acid solution to the cake-like composition or the powder-like composition.

In the synthesis step, for example, a metal oxide containing greater than or equal to 50 mol% of Ni, greater than or equal to 0 mol% and less than or equal to 15 mol% of Co, greater than or equal to 0 mol% and less than or equal to 50 mol% of Mn, greater than or equal to 0 mol% and less than or equal to 15 mol% of Al, and greater than or equal to 0 mol% and less than or equal to 2 mol% of M2 (where M2 represents one or more elements selected from W, Mg, Mo, Nb, Ti, Si, Ca, Sr, and Zr) and a Li compound are mixed to obtain a mixture.

The metal oxide can be obtained, for example, by adding an alkaline solution such as sodium hydroxide dropwise while stirring a solution of a metal salt including Ni and an arbitrary metal element (Co, Mn, Al, M2, etc.), adjusting the pH to the alkaline side (e.g., greater than or equal to 8.5 and less than or equal to 12.5), thereby precipitating (coprecipitating) a composite hydroxide including Ni and an arbitrary metal element, and heat-treating the composite hydroxide. The heat treatment temperature is not particularly limited, but is in the range of, for example, greater than or equal to 250°C and less than or equal to 600°C.

Examples of the Li compounds include $Li_2O_3$, LiOH, $Li_2O_2$, $Li_2O$, $LiNO_3$, $LiNO_2$, $Li_2SO_4$, $LiOH \cdot H_2O$, LiH, and LiF. The mixing ratio of the metal oxide and the Li compound is preferably such that the molar ratio between the total amount of metal elements in the metal oxide and Li is in the range of greater than or equal to 1:0.8 and less than or equal to 1:1.2, and more preferably greater than or equal to 1:1.0 and less than or equal to 1:1.1, from the viewpoint of facilitating the adjustment of the parameters to the defined ranges.

Next, the synthesis step includes a firing step of firing the obtained mixture. The firing step is, for example, a multi-stage firing step including at least a first firing step of firing the mixture at greater than or equal to 300°C and less than or equal to 680°C in an oxygen stream and a second firing step of firing a fired product obtained in the first firing step at a temperature exceeding 680°C in an oxygen stream. In the first firing step, the temperature is increased to a first set temperature of less than or equal to 680°C at a first temperature rising rate of greater than or equal to 0.2°C/min and less than or equal to 4.5°C/min. In the second firing step, the temperature is increased to a second set temperature of less than or equal to 900°C at a temperature rising rate of greater than or equal to 0.5°C/min and less than or equal to 3.5°C/min. Note that a plurality of first and second temperature rising rates may be set for each temperature region as long as the first and second temperature rising rates are within the above-defined ranges.

The holding time of the first set temperature in the first firing step is preferably less than or equal to 5 hours, and more preferably less than or equal to 3 hours. The holding time of the first set temperature refers to the duration during which the first set temperature is maintained after reaching the first set temperature, and the holding time may be zero. The holding time of the second set temperature in the second firing step is preferably greater than or equal to 1 hour and less than or equal to 10 hours, and more preferably greater than or equal to 1 hour and less than or equal to 5 hours. The holding

time of the second set temperature refers to the duration during which the second set temperature is maintained after reaching the second set temperature. The firing of the mixture is performed, for example, in an oxygen stream with an oxygen concentration of greater than or equal to 60%, and the flow rate of the oxygen stream is greater than or equal to 0.2 mL/min and less than or equal to 4 mL/min per 10 $cm^3$ of the firing furnace or greater than or equal to 0.3 L/min per 1 kg of the mixture.

In the washing step, the lithium-containing transition metal composite oxide is washed with water and dehydrated to obtain a cake-like composition. The lithium-containing transition metal composite oxide may be in particulate form as obtained from the synthesis step. Through washing, unreacted portions of the lithium compound added in the synthesis step, as well as impurities other than the lithium compound, can be removed. During water washing, for example, greater than or equal to 300 g and less than or equal to 5000 g of lithium-containing transition metal composite oxide may be charged per 1 L of water. Note that the water washing may be repeated a plurality of times, and the dehydration after the water washing can be performed by, for example, a filter press.

In the drying step, the cake-like composition obtained in the washing step is dried to obtain a powder-like composition. The drying step may be performed under a vacuum atmosphere. The drying conditions are, for example, greater than or equal to 150°C and less than or equal to 400°C for greater than or equal to 0.5 hours and less than or equal to 15 hours.

In the addition step, at least one of the group consisting of a sulfonate compound and a sulfonic acid solution is added to the cake-like composition obtained in the washing step or the powder-like composition obtained in the drying step. Accordingly, the sulfonate compound can be adhered to the surface of the lithium-containing transition metal composite oxide. At least one of the group consisting of a sulfonate compound and a sulfonic acid solution is preferably added to the cake-like composition. The sulfonate compound added may be in the form of powder or solution. The sulfonic acid solution is, for example, a methanesulfonic acid solution obtained by dissolving methanesulfonic acid in water. The Li compound remains in the cake-like composition, and the remaining Li compound is dissolved in water contained in the cake-like composition, whereby the sulfonate compound including Li is formed even when the sulfonic acid solution is added. From the viewpoint of enhancing the effects of the present disclosure, a lithium compound or a lithium compound solution may be added to the cake-like composition or powder-like composition together with the sulfonic acid solution. Alternatively, a mixed solution prepared in advance by mixing the sulfonic acid solution with the lithium compound or lithium compound solution may be added to the cake-like composition or powder-like composition. The lithium compound may be, for example, LiOH, and the lithium compound solution may be, for example, an LiOH solution obtained by dissolving LiOH in water. The amounts of the lithium compound and the sulfonic acid solution added to the cake-like composition preferably satisfy the relation $0 \leq$ Li compound/sulfonic acid $\leq 1.3$ in terms of molar ratio. The concentrations of the sulfonic acid solution and the sulfonate compound solution are each, for example, greater than or equal to 0.5 mass% and less than or equal to 40 mass%. Note that the addition step may be performed during or after the washing step, or during or after the drying step, and the timing of implementation may be appropriately changed.

A metal compound including one or more metal elements selected from the group consisting of Sr, Ca, W, Zr, rare earth elements, and Al, and a non-metal compound including one or more non-metal elements selected from the group consisting of P and B, may be adhered to the surface of the lithium-containing transition metal composite oxide by adding raw materials of the metal compound and the non-metal compound at any stage selected from during or after the synthesis step, during or after the washing step, during or after the drying step, or during the addition step. Examples of Sr raw materials include $Sr(OH)_2$, $Sr(OH)_2 \cdot 8H_2O$, SrO, $SrCO_3$, $SrSO_4$, $Sr(NO_3)_2$, $SrCl_2$, and $SrAlO_4$. Examples of Ca raw materials include $Ca(OH)_2$, CaO, $CaCO_3$, $CaSO_4$, $Ca(NO_3)_2$, $CaCl_2$, and $CaAlO_4$. Examples of Zr raw materials include $Zr(OH)_4$, $ZrO_2$, $Zr(CO_3)_2$, and $Zr(SO_4)_2 \cdot 4H_2O$. Examples of rare earth raw materials include rare earth oxides, hydroxides, and carbonates. Examples of W raw materials include tungsten oxide ($WO_3$) and lithium tungstates ($Li_2WO_4$, $Li_4WO_5$, $Li_6W_2O_9$). A solution containing W may also be used as a W raw material. Examples of Al raw materials include $Al_2O_3$, $Al(OH)_3$, and $Al_2(SO_4)_3$, although Al derived from the lithium-containing transition metal composite oxide may also be used. Examples of P raw materials include $Li_{3-x}H_xPO_4$ ($0 \leq x \leq 3$). Examples of B raw materials include $H_3BO_3$, $Li_3BO_3$, and $Li_2B_4O_7$. These compounds may be pulverized to appropriately adjust the particle shape or particle diameter or may be used after adjusting the water content, including hydrates.

The positive electrode mixture layer 31 includes, for example, a conductive auxiliary agent. Examples of the conductive auxiliary agent included in the positive electrode mixture layer 31 include carbon-based particles such as carbon black (CB), including furnace black (FB), acetylene black (AB), and Ketjenblack (KB), and graphite. These may be used singly or in combinations of two or more thereof. The content ratio of the conductive auxiliary agent is, for example, greater than or equal to 0.01 mass% and less than or equal to 10 mass%, preferably greater than or equal to 0.05 mass% and less than or equal to 5 mass%, relative to the total mass of the positive electrode active material.

The positive electrode mixture layer 31 includes, for example, a binder. Examples of the binder included in the positive electrode mixture layer 31 include fluorine-containing polymers such as polytetrafluoroethylene (PTFE) and polyvinylidene fluoride (PVDF), polyacrylonitrile (PAN), polyimide, acrylic resin, and polyolefin. Among them, the binder preferably includes a fluorine-containing polymer. In this case, the effect of reducing the reaction resistance by the

sulfonate compound is remarkably exhibited. As the binder, the resin may be used in combination with carboxymethyl cellulose (CMC) or a salt thereof, polyethylene oxide (PEO), or the like.

When the binder includes a fluorine-containing polymer, the weight-average molecular weight of the fluorine-containing polymer is preferably greater than or equal to 1 million. In this case, the positive electrode mixture layer 31 having a good binding property can be produced even if the content ratio of the binder is reduced. The upper limit of the weight-average molecular weight of the fluorine-containing polymer is, for example, 5 million.

Here, the content ratio of the binder in the second region 31b is preferably lower than the content ratio of the binder in the first region 31a. In this case, the reaction resistance on the surface side of the positive electrode 11 can be further reduced, and the output characteristics of the battery can be further improved at a low temperature when the diffusivity of the non-aqueous electrolyte is reduced. In addition, the amount of the binder in the positive electrode mixture layer 31 is maintained by increasing the content ratio of the binder in the first region 31a, resulting in suppression of peeling of the positive electrode mixture layer 31. In other words, when the content ratio of the binder is reduced throughout the entire positive electrode mixture layer 31, the positive electrode mixture layer 31 is likely to peel off.

The ratio of the content ratio of the binder in the second region 31b to the content ratio of the binder in the first region 31a satisfies, for example, greater than or equal to 0.2 and less than or equal to 1, preferably greater than or equal to 0.4 and less than or equal to 0.9. In this case, the output characteristics of the battery can be further improved while suppressing peeling of the positive electrode mixture layer 31.

The content ratio of the binder in the first region 31a is, for example, greater than or equal to 0.1 mass% and less than or equal to 10 mass%, preferably greater than or equal to 0.5 mass% and less than or equal to 8 mass%, relative to the total mass of the positive electrode active material in the first region 31a. The content ratio of the binder in the second region 31b is, for example, greater than or equal to 0.1 mass% and less than or equal to 5 mass%, preferably greater than or equal to 0.2 mass% and less than or equal to 2 mass%, relative to the total mass of the positive electrode active material in the second region 31b.

The positive electrode 11 can be produced by applying a positive electrode mixture slurry including a positive electrode active material, a conductive auxiliary agent, and a binder to the positive electrode core 30, drying the coating, and then compressing the dried coating to form the positive electrode mixture layer 31 on each of both surfaces of the positive electrode core 30. As the positive electrode mixture slurry, a plurality of kinds of slurry each including a positive electrode active material having a different content ratio of the sulfonate compound may be used, or a plurality of kinds of slurry each including a plurality of positive electrode active materials having a different content ratio of the sulfonate compound and having a different blending ratio of the plurality of positive electrode active materials may be used. When a plurality of kinds of slurry each including a positive electrode active material having a different content ratio of the sulfonate compound are used, for example, a first positive electrode mixture slurry including a first positive electrode active material in which the sulfonate compound is present on the surfaces of particles of a lithium-containing transition metal composite oxide, and a second positive electrode mixture slurry including a second positive electrode active material having a higher content ratio of the sulfonate compound than that of the first positive electrode active material are used as the positive electrode mixture slurry. Then, after the first positive electrode mixture slurry is applied to the positive electrode core 30, the second positive electrode mixture slurry is applied to the coating. As a result, the positive electrode mixture layer 31 having a two-layer structure including the first positive electrode mixture layer formed of the first positive electrode mixture slurry and the second positive electrode mixture layer formed of the second positive electrode mixture slurry can be formed, but any method may be used for the formation as long as the content ratios of the sulfonate compounds in the first region and the second region can be controlled. Note that when a plurality of types of slurry including a plurality of types of positive electrode active materials having different content ratios of sulfonate compounds and having different blending proportions of the plurality of positive electrode active materials are used, for example, a first a positive electrode mixture slurry including a first positive electrode active material and a second positive electrode active material, in which the content ratio of the first positive electrode active material is higher than the content ratio of the second positive electrode active material, and a second a positive electrode mixture slurry including the first positive electrode active material and the second positive electrode active material, in which the content ratio of the second positive electrode active material is higher than the content ratio of the first positive electrode active material, are used. When the first region and the second region are formed as the first positive electrode mixture layer and the second positive electrode mixture layer, which are different layers, respectively, the ratio (T2/T1) of the thickness (T2) of the second positive electrode mixture layer on the surface side of the positive electrode mixture layer 31 to the thickness (T1) of the first positive electrode mixture layer on the positive electrode core 30 side of the positive electrode mixture layer 31 is, for example, greater than or equal to 0.1 and less than or equal to 10, preferably greater than or equal to 0.2 and less than or equal to 5. Note that the types of the positive electrode mixture layer slurry are not limited to two, and three or more kinds thereof may be used. In other words, the positive electrode mixture layer 31 may have a multilayer structure composed of three or more layers.

[Negative Electrode]

The negative electrode 12 may have, for example, a negative electrode core and a negative electrode mixture layer formed on the surface of the negative electrode core, or a metal Li foil may be used as the negative electrode 12. The negative electrode 12 may have a negative electrode core, and lithium metal may be deposited on the surface of the negative electrode core by charging. When the negative electrode 12 has a negative electrode mixture layer, the negative electrode mixture layer is preferably formed on each of both surfaces of the negative electrode core. As the negative electrode core, a metal foil that is stable in the potential range of the negative electrode 12, such as copper or a copper alloy, or a film with the metal disposed on a surface layer may be used. The thickness of the negative electrode core is, for example, greater than or equal to 5 μm and less than or equal to 30 μm.

The negative electrode mixture layer includes, for example, a negative electrode active material and a binder. The thickness of the negative electrode mixture layer is greater than or equal to 10 μm and less than or equal to 150 μm, for example, on one side of the negative electrode core. The negative electrode 12 can be produced, for example, by coating a negative electrode mixture slurry including a negative electrode active material, a binder or the like on the surface of the negative electrode core, drying the coating, and rolling the dried coating to form the negative electrode mixture layer on each of both surfaces of the negative electrode core.

As the negative electrode active material included in the negative electrode mixture layer, any material capable of reversibly intercalating and releasing lithium ions may be used without particular limitation, and generally, carbon materials such as graphite are used. The graphite may be natural graphite, such as flake graphite, lump graphite, or earthy graphite, or artificial graphite, such as lump artificial graphite or graphitized mesophase carbon microbeads. In addition, as the negative electrode active material, metals that alloy with Li, such as Si and Sn, metal compounds including Si, Sn, or the like, or lithium titanium composite oxides may be used. Furthermore, materials provided with a carbon coating on these may also be used. For example, Si-containing compounds represented by $SiO_x$ ($0.5 \leq x \leq 1.6$) or Si-containing compounds in which fine Si particles are dispersed in a lithium silicate phase represented by $Li_{2y}SiO_{(2+y)}$ ($0 < y < 2$), may be used in combination with graphite.

Examples of the binder included in the negative electrode mixture layer include styrene-butadiene rubber (SBR), nitrile-butadiene rubber (NBR), carboxymethyl cellulose (CMC) or salts thereof, polyacrylic acid (PAA) or a salt thereof (such as PAA-Na, PAA-K, or partially neutralized salts), and polyvinyl alcohol (PVA). These may be used singly or in combination with two or more kinds thereof.

[Separator]

As the separator 13, a porous sheet having ion permeability and insulation properties may be used. Specific examples of the porous sheet include microporous films, woven fabrics, and nonwoven fabrics. Suitable materials for the separator 13 include polyolefins such as polyethylene and polypropylene, and cellulose. The separator 13 may have a single-layer structure or a multilayer structure. Further, a heat-resistant resin layer such as an aramid resin layer may be formed on the surface of the separator 13.

A filler layer including an inorganic filler may be formed at the interface between the separator 13 and at least one of the group consisting of the positive electrode 11 and the negative electrode 12. Examples of the inorganic filler include oxides containing metal elements such as Ti, Al, Si, and Mg, and phosphate compounds. The filler layer can be formed by applying a slurry containing the filler to the surface of the positive electrode 11, the negative electrode 12, or the separator 13.

[Non-Aqueous Electrolyte]

The non-aqueous electrolyte has ion conductivity (for example, lithium ion conductivity). The non-aqueous electrolyte may be a liquid electrolyte (electrolyte solution) or a solid electrolyte.

The liquid electrolyte (electrolyte solution) includes, for example, a non-aqueous solvent and an electrolyte salt dissolved therein. Examples of the non-aqueous solvent include esters, ethers, nitriles such as acetonitrile, amides such as dimethylformamide, and mixed solvents composed of two or more kinds thereof. The non-aqueous solvent may contain halogen-substituted products in which at least some of the hydrogen atoms in the solvent molecules are replaced with halogen atoms such as fluorine. Examples of the halogen-substituted products include fluorinated cyclic carbonate esters such as fluoroethylene carbonate (FEC), fluorinated linear carbonate esters, and fluorinated linear carboxylic acid esters such as methyl fluoro-propionate (FMP).

Examples of the esters include cyclic carbonate esters such as ethylene carbonate (EC), propylene carbonate (PC), and butylene carbonate; linear carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as γ-butyrolactone (GBL) and γ-valerolactone (GVL); and linear carboxylic acid esters such

as methyl acetate, ethyl acetate, propyl acetate, methyl propionate (MP), and ethyl propionate (EP).

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ethers; and linear ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of lithium salts include $LiClO_4$, $LiBF_4$, $LiPF_6$, $LiAlC_4$, $LiSbF_6$, LiSCN, $LiCF_3SO_3$, $LiCF_3CO_2$, $LiAsF_6$, $LiB_{10}Cl_{10}$, lower aliphatic carboxylic acid lithium salts, LiCl, LiBr, LiI, phosphate salts, borate salts, and imide salts. Examples of phosphate salts include lithium difluorophosphate ($LiPO_2F_2$), lithium difluoro bis(oxalato)phosphate (LiDFBOP), and lithium tetrafluoro(oxalato)phosphate. Examples of borate salts include lithium bis(oxalato)borate (LiBOB) and lithium difluoro(oxalato)borate (LiDFOB). Examples of imide salts include lithium bis(fluorosulfonyl)imide ($LiN(FSO_2)_2$), lithium bis(trifluoromethanesulfonyl)imide ($LiN(CF_3SO_2)_2$), lithium trifluoromethanesulfonyl nonafluorobutanesulfonyl imide ($LiN(CF_3SO_2)(C_4F_9SO_2)$), and lithium bis(pentafluoroethanesulfonyl) imide ($LiN(C_2F_5SO_2)_2$). Among these, $LiPF_6$ is preferably used from the standpoint of ionic conductivity and electrochemical stability. The concentration of the lithium salt may be, for example, less than or equal to 4 mol per liter of non-aqueous solvent, preferably less than or equal to 3 mol, more preferably less than or equal to 1.8 mol, and even more preferably greater than or equal to 0.8 mol and less than or equal to 1.8 mol.

The non-aqueous electrolyte may include an additive. Examples of additives include unsaturated carbonate esters, acid anhydrides, phenolic compounds, benzene compounds, nitrile compounds, isocyanate compounds, sultone compounds, sulfate compounds, borate ester compounds, phosphate ester compounds, and phosphite ester compounds.

Examples of unsaturated cyclic carbonate esters include vinylene carbonate, 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinyl ethylene carbonate, and divinyl ethylene carbonate. The unsaturated cyclic carbonate ester may be used singly or in combination with two or more kinds thereof. The unsaturated cyclic carbonate ester may have a portion of its hydrogen atoms substituted with fluorine atoms. The acid anhydride may be an anhydride formed by intermolecular condensation of multiple carboxylic acid molecules, but is preferably an acid anhydride of a polycarboxylic acid. Examples of polycarboxylic acid anhydrides include succinic anhydride, maleic anhydride, and phthalic anhydride.

Examples of the phenolic compounds include phenol and hydroxytoluene. Examples of benzene compounds include fluorobenzene, hexafluorobenzene, and cyclohexylbenzene (CHB).

Examples of the nitrile compounds include adiponitrile, pimelonitrile, propionitrile, and succinonitrile. Examples of the isocyanate compounds include methyl isocyanate (MIC), diphenylmethane diisocyanate (MDI), hexamethylene diisocyanate (HDI), toluene diisocyanate (TDI), isophorone diisocyanate (IPDI), and bis(isocyanatomethyl)cyclohexane (BIMCH). Examples of the sultone compounds include propane sultone and propene sultone. Examples of the sulfate compounds include ethylene sulfate, ethylene sulfite, dimethyl sulfate, and lithium fluorosulfate. Examples of the borate ester compounds include trimethyl borate and tris(trimethylsilyl)borate. Examples of the phosphate ester compounds include trimethyl phosphate and tris(trimethylsilyl)phosphate. Examples of the phosphite ester compounds include trimethyl phosphite and tris(trimethylsilyl)phosphite.

As the solid electrolyte, for example, a solid or gel-type polymer electrolyte or an inorganic solid electrolyte may be used. As the inorganic solid electrolyte, materials known for use in all-solid-state lithium-ion secondary batteries, such as oxide-based solid electrolytes, sulfide-based solid electrolytes, and halide-based solid electrolytes, may be used. The polymer electrolyte includes, for example, a lithium salt and a matrix polymer, or a non-aqueous solvent, a lithium salt, and a matrix polymer. As the matrix polymer, polymer materials capable of absorbing the non-aqueous solvent and forming a gel may be used. Examples of the polymer materials include fluororesins, acrylic resins, and polyether resins.

## EXAMPLES

Hereinafter, the present disclosure will be described in more detail with reference to Examples, but the present disclosure is not limited to these Examples.

### <Example 1>

[Production of Positive Electrode Active Material]

A composite hydroxide represented by $[Ni_{0.90}Co_{0.05}Al_{0.05}](OH)_2$ obtained by a coprecipitation method was fired at 500°C for 8 hours to obtain a metal oxide including Ni, Co, and Al. Then, lithium hydroxide monohydrate ($LiOH \cdot H_2O$) was mixed so that the molar ratio of Li to the total amount of Ni, Co, and Al was 1:1.03 to obtain a mixture. Then, under an oxygen stream at an oxygen concentration of 95% (flow rate of 2 mL/min per 10 $cm^3$ and 5 L/min per kg of mixture), the mixture was heated from room temperature to 650°C at a temperature rising rate of 2.0°C/min, heated from 650°C to 740°C at a temperature rising rate of 0.5°C/min, and obtained was a lithium-containing transition metal composite oxide (synthesis step).

Water was added to the obtained lithium-containing transition metal composite oxide so that the slurry concentration was 1500 g/L, and the mixture was stirred for 15 minutes and filtered to obtain a cake-like composition (washing step). Then, the obtained cake-like composition was dried under a vacuum atmosphere at 180°C for 2 hours to obtain a powder-like composition (drying step). Thereafter, powdered lithium methanesulfonate was added to the obtained powder-like composition (addition step). At this point, two positive electrode active materials having different content ratios of lithium methanesulfonate were produced. More specifically, a first positive electrode active material obtained by adding lithium methanesulfonate so that the content ratio of lithium methanesulfonate was 0.3 mass% relative to the total mass of the lithium-containing transition metal composite oxide and a second positive electrode active material obtained by adding lithium methanesulfonate so that the content ratio of lithium methanesulfonate was 0.7 mass% relative to the total mass of the lithium-containing transition metal composite oxide were prepared. It was confirmed by Fourier transform infrared spectroscopy (FT-IR) that lithium methanesulfonate was present on the surfaces of the secondary particles of the lithium-containing transition metal composite oxide constituting each of the first positive electrode active material and the second positive electrode active material.

[Production of Positive Electrode]

In N-methyl-2-pyrrolidone (NMP), the first positive electrode active material, acetylene black (AB), and polyvinylidene fluoride (PVdF) having an average molecular weight of about $1.2 \times 10^6$ were mixed at a mass ratio of 98:1:1 to prepare a first positive electrode mixture slurry. In addition, a second positive electrode mixture slurry was prepared in the same manner as in the case of preparing a first mixture slurry, except that the second positive electrode active material was used instead of the first positive electrode active material.

Then, the first positive electrode mixture slurry was applied to each of both surfaces of the positive electrode core made of aluminum foil. Subsequently, the second positive electrode mixture slurry was applied to the coating of the first positive electrode mixture slurry, the coating was dried, and the dried coating was compressed and then cut into a predetermined electrode size to produce a positive electrode in which a positive electrode mixture layer having a two-layer structure including a lower layer (first positive electrode mixture layer) and an upper layer (second positive electrode mixture layer) was formed on each of both surfaces of the positive electrode core. Note that each positive electrode mixture slurry was applied so that the mass ratio of the first positive electrode mixture layer to the second positive electrode mixture layer was 50:50. That is, the ratio (T2/T1) of the thickness (T2) of the second positive electrode mixture layer to the thickness (T1) of the first positive electrode mixture layer is 1.0. Thus, the content ratio of the sulfonate compound in the first region was 0.3 mass%, and the content ratio of the sulfonate compound in the second region was 0.7 mass%. The basis weight of the positive electrode mixture layer was 270 $g/m^2$.

[Production of Negative Electrode]

As negative electrode active materials, natural graphite and a silicon compound were used. Natural graphite, a silicon compound, sodium carboxymethylcellulose (CMC-Na), and a dispersion of styrene-butadiene rubber (SBR) were mixed at a solid content mass ratio of 95:5:1:1, and water was used as a dispersion medium to prepare a negative electrode mixture slurry. The negative electrode mixture slurry was applied to both surfaces of a negative electrode core made of copper foil, the coating was dried, then rolled using a roller, and cut to a predetermined electrode size to obtain a negative electrode in which a negative electrode mixture layer was formed on both the surfaces of the negative electrode core. Note that an exposed portion, in which the surface of the negative electrode core was exposed, was provided in a part of the negative electrode.

[Preparation of Non-Aqueous Electrolyte]

Ethylene carbonate (EC), ethyl methyl carbonate (EMC), and dimethyl carbonate (DMC) were mixed at a volume ratio of 3:3:4. Lithium hexafluorophosphate ($LiPF_6$) was then dissolved in the resulting mixed solvent so that the concentration was 1.2 mol/L to prepare a non-aqueous electrolyte.

[Production of Test Cell (Non-Aqueous Electrolyte Secondary Battery)]

An aluminum lead was attached to the exposed portion of the positive electrode, a nickel lead was attached to the exposed portion of the negative electrode, and the positive electrode and the negative electrode were spirally wound via a separator made of a polyolefin to produce a wound electrode assembly. This electrode assembly was housed in a bottomed cylindrical exterior housing can, the non-aqueous electrolyte solution was injected therein, and then an opening portion of the exterior housing can was closed off by a sealing assembly to obtain a test cell.

[Evaluation of Output Characteristics at Low Temperature]

The test cell was charged to 4.2 V at a constant current of 0.2 C under a temperature environment of 25°C and then charged at a constant voltage of 4.2 V until the current value was equivalent to 0.01 C. After a pause of 1 hour, the test cell was then discharged to 2.5 V at a constant current of 0.2 C, thereby completing the initial cycle, and after a 1-hour pause, again charged at a constant current of 0.2 C until the battery voltage reached 4.2 V and charged at a constant voltage of 4.2 V until the current value reached 0.01 C. Then, the ambient temperature was changed to 5°C, and after a pause of 2 hours, the test cell was discharged to 2.5 V at 1 C. After a pause of 10 minutes as it was, the test cell was further discharged to 2.5 V at 0.02 C, and the initial output was determined using the following equation.

Initial output at low temperature = 1 C discharge capacity/(1 C discharge capacity + 0.02 C discharge capacity)

<Example 2>

A test cell was produced in the same manner as in Example 1, except that in the production of the positive electrode active material, lithium methanesulfonate was not added to the first positive electrode active material, and the content ratio of lithium methanesulfonate in the second positive electrode active material was adjusted to 1.0 mass%. That is, the content ratio of the sulfonate compound in the first region was 0 mass%, and the content ratio of the sulfonate compound in the second region was 1.0 mass%.

<Example 3>

A test cell was produced in the same manner as in Example 1, except that in the production of the positive electrode, the basis weight of the positive electrode mixture layer was adjusted to 240 g/$m^2$. That is, the content ratio of the sulfonate compound in the first region was 0.3 mass%, and the content ratio of the sulfonate compound in the second region was 0.7 mass%.

<Example 4>

A test cell was produced in the same manner as in Example 1, except that in the production of the positive electrode active material, the content ratio of lithium methanesulfonate in the first positive electrode active material was adjusted to 0.3 mass%, and the content ratio of lithium methanesulfonate in the second positive electrode active material was adjusted to 1.2 mass%. That is, the content ratio of the sulfonate compound in the first region was 0.3 mass%, and the content ratio of the sulfonate compound in the second region was 1.2 mass%.

<Example 5>

A test cell was produced in the same manner as in Example 1, except that in the production of the positive electrode, the content ratio of PVdF in the first positive electrode mixture slurry was made higher than the content ratio of PVdF in the second positive electrode mixture slurry. More specifically, the first positive electrode active material, acetylene black (AB), and polyvinylidene fluoride (PVdF) having an average molecular weight of $1.2 \times 10^6$ were mixed at a mass ratio of 97.8:1:1.2 to prepare a first positive electrode mixture slurry. The second positive electrode active material, acetylene black (AB), and polyvinylidene fluoride (PVdF) having an average molecular weight of $1.2 \times 10^6$ were mixed at a mass ratio of 98.2:1:0.8 to prepare a second positive electrode mixture slurry.

<Example 6>

A test cell was produced in the same manner as in Example 1, except that in the production of the positive electrode, the content ratio of PVdF in the first positive electrode mixture slurry was made lower than the content ratio of PVdF in the second positive electrode mixture slurry. More specifically, the first positive electrode active material,

acetylene black (AB), and polyvinylidene fluoride (PVdF) having an average molecular weight of $1.2 \times 10^6$ were mixed at a mass ratio of 98.2:1:0.8 to prepare a first positive electrode mixture slurry. The second positive electrode active material, acetylene black (AB), and polyvinylidene fluoride (PVdF) having an average molecular weight of $1.2 \times 10^6$ were mixed at a mass ratio of 97.8:1:1.2 to prepare a second positive electrode mixture slurry.

<Example 7>

A test cell was produced in the same manner as in Example 1, except that in the production of the positive electrode, the content ratio of PVdF in the first positive electrode mixture slurry was made higher than the content ratio of PVdF in the second positive electrode mixture slurry, and polyvinylidene fluoride (PVdF) having a small average molecular weight was used for both the first positive electrode mixture slurry and the second positive electrode mixture slurry. More specifically, the first positive electrode active material, acetylene black (AB), and polyvinylidene fluoride (PVdF) having an average molecular weight of $9.0 \times 10^5$ were mixed at a mass ratio of 97.8:1:1.2 to prepare a first positive electrode mixture slurry. In addition, the second positive electrode active material, acetylene black (AB), and polyvinylidene fluoride (PVdF) having an average molecular weight of $9.0 \times 10^5$ were mixed at a mass ratio of 98.2:1:0.8 to prepare a second positive electrode mixture slurry.

<Comparative Example 1>

A test cell was produced in the same manner as in Example 1, except that the addition step was omitted in the production of the positive electrode active material, and the positive electrode was produced using one kind of positive electrode mixture slurry in the production of the positive electrode.

<Comparative Example 2>

A test cell was produced in the same manner as in Example 1, except that in the production of the positive electrode active material, the content ratio of lithium methanesulfonate in each of the first positive electrode active material and the second positive electrode active material was adjusted to 0.5 mass% relative to the total mass of the lithium-containing transition metal composite oxide. That is, the content ratio of the sulfonate compound in each of the first region and the second region in the positive electrode of Comparative Example 2 was 0.5 mass%.

<Comparative Example 3>

A test cell was produced in the same manner as in Example 1, except that in the production of the positive electrode active material, the content ratio of lithium methanesulfonate in each of the first positive electrode active material and the second positive electrode active material was adjusted to 0.5 mass% relative to the total mass of the lithium-containing transition metal composite oxide, and in the production of the positive electrode, the basis weight of the positive electrode mixture layer was adjusted to 240 $g/m^2$. That is, the content ratio of the sulfonate compound in each of the first region and the second region in the positive electrode of Comparative Example 2 was 0.5 mass%.

<Comparative Example 4>

A test cell was produced in the same manner as in Example 1, except that in the production of the positive electrode, the content ratio of lithium methanesulfonate in the first positive electrode active material was adjusted to 0.7 mass%, and the content ratio of lithium methanesulfonate in the second positive electrode active material was adjusted to 0.3 mass%. That is, the content ratio of the sulfonate compound in the first region was 0.7 mass%, and the content ratio of the sulfonate compound in the second region was 0.3 mass%.

<Comparative Example 5>

A test cell was produced in the same manner as in Example 1, except that in the production of the positive electrode active material, the content ratio of lithium methanesulfonate in each of the first positive electrode active material and the second positive electrode active material was adjusted to 0.3 mass% relative to the total mass of the lithium-containing transition metal composite oxide. That is, the content ratio of the sulfonate compound in each of the first region and the second region in the positive electrode of Comparative Example 2 was 0.3 mass%.

<Comparative Example 6>

A test cell was produced in the same manner as in Example 1, except that in the production of the positive electrode active material, the content ratio of lithium methanesulfonate in each of the first positive electrode active material and the second positive electrode active material was adjusted to 0.7 mass% relative to the total mass of the lithium-containing transition metal composite oxide. That is, the content ratio of the sulfonate compound in each of the first region and the second region in the positive electrode of Comparative Example 2 was 0.7 mass%.

Table 1 shows the initial output of the test cells in Examples 1 to 7 and Comparative Examples 1 to 6 at a low temperature. The initial output at a low temperature of each of the test cells in Examples 1 to 7 and Comparative Examples 1 to 6 shown in Table 1 was expressed relatively, taking the initial output of the test cell in Comparative Example 1 as 100. A larger value of the initial output at a low temperature means better output characteristics at a low temperature.

[Table 1]

| | Positive electrode | | | | | | | | Evaluation result |
|---|---|---|---|---|---|---|---|---|---|
| | Sulfonate compound | | | Binder | | | | Basis weight [g/m$^2$] | Initial output at low temperature (relative value) |
| | Type | Content ratio (X) in first region [mass%] | Content ratio (Y) in second region [mass%] | Type | Molecular weight | Content ratio in first region [mass%] | Content ratio in second region [mass%] | | |
| Example 1 | Li methanesulfonate | 0.3 | 0.7 | PVdF | 1.2 × 10^6 | 1.0 | 1.0 | 270 | 130 |
| Example 2 | Li methanesulfonate | 0 | 1.0 | PVdF | 1.2 × 10^6 | 1.0 | 1.0 | 270 | 125 |
| Example 3 | Li methanesulfonate | 0.3 | 0.7 | PVdF | 1.2 × 10^6 | 1.0 | 1.0 | 240 | 150 |
| Example 4 | Li methanesulfonate | 0.3 | 1.2 | PVdF | 1.2 × 10^6 | 1.0 | 1.0 | 270 | 114 |
| Example 5 | Li methanesulfonate | 0.3 | 0.7 | PVdF | 1.2 × 10^6 | 1.2 | 0.8 | 270 | 153 |
| Example 6 | Li methanesulfonate | 0.3 | 0.7 | PVdF | 1.2 × 10^6 | 0.8 | 1.2 | 270 | 116 |
| Example 7 | Li methanesulfonate | 0.3 | 0.7 | PVdF | 9.0 × 10^5 | 1.2 | 0.8 | 270 | 149 |
| Comparative Example 1 | - | - | - | PVdF | 1.2 × 10^6 | 1.0 | 1.0 | 270 | 100 |
| Comparative Example 2 | Li methanesulfonate | 0.5 | 0.5 | PVdF | 1.2 × 10^6 | 1.0 | 1.0 | 270 | 104 |
| Comparative Example 3 | Li methanesulfonate | 0.5 | 0.5 | PVdF | 1.2 × 10^6 | 1.0 | 1.0 | 240 | 107 |
| Comparative Example 4 | Li methanesulfonate | 0.7 | 0.3 | PVdF | 1.2 × 10^6 | 1.0 | 1.0 | 270 | 103 |
| Comparative Example 5 | Li methanesulfonate | 0.3 | 0.3 | PVdF | 1.2 × 10^6 | 1.0 | 1.0 | 270 | 103 |
| Comparative Example 6 | Li methanesulfonate | 0.7 | 0.7 | PVdF | 1.2 × 10^6 | 1.0 | 1.0 | 270 | 106 |

As shown in Table 1, the test cells in Examples have improved initial output at a low temperature as compared with the test cells in Comparative Examples. That is, when the content ratio of the sulfonate compound in the second region is higher than the content ratio of the sulfonate compound in the first region, the output characteristics at a low temperature can be improved. On the other hand, the test cell in Comparative Example 2, in which the content ratio of the sulfonate compound in the first region and the second region is reduced, has a smaller effect of improving the output characteristics at a low temperature than the test cells in Examples. Presumably this is because the effect of reducing the reaction resistance of the positive electrode due to the sulfonate compound is insufficient. In addition, the test cell in Comparative Example 3, in which the content ratio of the sulfonate compound in the first region and the second region is increased, has a smaller effect of improving the output characteristics at a low temperature than the test cells in Examples, presumably because the presence of the sulfonate compound on the surfaces of the particles reduces the electronic conductivity of the lithium-containing transition metal composite oxide, thereby increasing the electron resistance of the entire positive electrode mixture layer.

The test cells in Examples 5 and 6, in which the content ratio of the binder in the second region is lower than the content ratio of the binder in the first region, have improved output characteristics at a low temperature as compared with the test cell in Example 1, presumably because the reaction resistance on the surface side of the positive electrode is further reduced by reducing the content ratio of the binder in the second region.

The present disclosure will be further described with reference to embodiments below.

Constitution 1: A positive electrode for a non-aqueous electrolyte secondary battery, having:

a positive electrode core; and
a positive electrode mixture layer formed on a surface of the positive electrode core, wherein
the positive electrode mixture layer includes a lithium-containing transition metal composite oxide as a positive electrode active material, a sulfonate compound represented by formula (I) is present on surfaces of particles of the lithium-containing transition metal composite oxide, and when the positive electrode mixture layer is divided into two equal parts in a thickness direction to define a region on a positive electrode core side of the positive electrode mixture layer as a first region and a region on a surface side of the positive electrode mixture layer as a second region, a content ratio of the sulfonate compound in the second region is higher than a content ratio of the sulfonate compound in the first region,

[Formula 3]

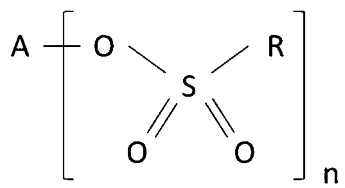

(I)

wherein A represents a group I or group II element, R represents a hydrocarbon group, and n represents 1 or 2.

Constitution 2: The positive electrode for a non-aqueous electrolyte secondary battery according to Constitution 1, wherein a ratio (Y/X) of a content ratio (Y) of the sulfonate compound in the second region to a content ratio (X) of the sulfonate compound in the first region satisfies $1 < (Y/X) \leq 10$.

Constitution 3: The positive electrode for a non-aqueous electrolyte secondary battery according to Constitution 1 or 2, wherein the content ratio (X) of the sulfonate compound in the first region is greater than or equal to 0 mass% and less than or equal to 0.5 mass% relative to a total mass of the positive electrode active material in the first region, and the content ratio (Y) of the sulfonate compound in the second region is greater than or equal to 0.3 mass% and less than or equal to 2.0 mass% relative to a total mass of the positive electrode active material in the second region.

Constitution 4: The positive electrode for a non-aqueous electrolyte secondary battery according to any one of Constitutions 1 to 3, wherein the positive electrode mixture layer further includes a binder, and a content ratio of the binder in the second region is lower than a content ratio of the binder in the first region.

Constitution 5: The positive electrode for a non-aqueous electrolyte secondary battery according to any one of Constitutions 1 to 4, wherein the positive electrode mixture layer further includes a binder, the binder includes a fluorine-containing polymer, and the fluorine-containing polymer has a weight-average molecular weight of greater than or equal to 1 million.

Constitution 6: The positive electrode for a non-aqueous electrolyte secondary battery according to any one of Constitutions 1 to 5, wherein the lithium-containing transition metal composite oxide contains greater than or equal to 50

mol% of Ni relative to a total molar amount of metal elements excluding Li and one or more elements selected from the group consisting of Co, Mn, and Al.

Constitution 7: The positive electrode for a non-aqueous electrolyte secondary battery according to any one of Constitutions 1 to 6, wherein a basis weight of the positive electrode mixture layer is greater than or equal to 250 $g/m^2$.

Constitution 8: A non-aqueous electrolyte secondary battery, comprising:

the positive electrode according to any one of Constitutions 1 to 7;
a negative electrode; and
a non-aqueous electrolyte.

REFERENCE SIGNS LIST

10 Non-aqueous electrolyte secondary battery, 11 Positive electrode, 12 Negative electrode, 13 Separator, 14 Electrode assembly, 16 Outer case, 17 Sealing assembly, 18, 19 Insulating plate, 20 Positive lead, 21 Negative lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 31a First region, 31b Second region

## Claims

1. A positive electrode for a non-aqueous electrolyte secondary battery, having:

   a positive electrode core; and
   a positive electrode mixture layer formed on a surface of the positive electrode core, wherein
   the positive electrode mixture layer includes a lithium-containing transition metal composite oxide as a positive electrode active material,
   a sulfonate compound represented by formula (I) is present on surfaces of particles of the lithium-containing transition metal composite oxide, and
   when the positive electrode mixture layer is divided into two equal parts in a thickness direction to define a region on a positive electrode core side of the positive electrode mixture layer as a first region and a region on a surface side of the positive electrode mixture layer as a second region, a content ratio of the sulfonate compound in the second region is higher than a content ratio of the sulfonate compound in the first region,

   [Formula 1]

   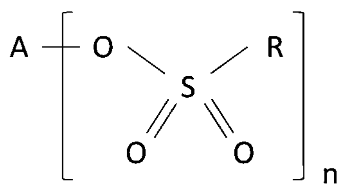

   (I)

   wherein A represents a group I or group II element, R represents a hydrocarbon group, and n represents 1 or 2.

2. The positive electrode for a non-aqueous electrolyte secondary battery according to claim 1, wherein a ratio (Y/X) of a content ratio (Y) of the sulfonate compound in the second region to a content ratio (X) of the sulfonate compound in the first region satisfies $1 < (Y/X) \leq 10$.

3. The positive electrode for a non-aqueous electrolyte secondary battery according to claim 1, wherein

   the content ratio (X) of the sulfonate compound in the first region is greater than or equal to 0 mass% and less than or equal to 0.5 mass% relative to a total mass of the positive electrode active material in the first region, and
   the content ratio (Y) of the sulfonate compound in the second region is greater than or equal to 0.3 mass% and less than or equal to 2.0 mass% relative to a total mass of the positive electrode active material in the second region.

4. The positive electrode for a non-aqueous electrolyte secondary battery according to claim 1, wherein

the positive electrode mixture layer further includes a binder, and
a content ratio of the binder in the second region is lower than a content ratio of the binder in the first region.

**5.** The positive electrode for a non-aqueous electrolyte secondary battery according to claim 1, wherein

the positive electrode mixture layer further includes a binder,
the binder includes a fluorine-containing polymer, and
the fluorine-containing polymer has a weight-average molecular weight of greater than or equal to 1 million.

**6.** The positive electrode for a non-aqueous electrolyte secondary battery according to claim 1, wherein the lithium-containing transition metal composite oxide contains greater than or equal to 50 mol% of Ni relative to a total molar amount of metal elements excluding Li, and one or more elements selected from the group consisting of Co, Mn, and Al.

**7.** The positive electrode for a non-aqueous electrolyte secondary battery according to claim 1, wherein a basis weight of the positive electrode mixture layer is greater than or equal to 250 $g/m^2$.

**8.** A non-aqueous electrolyte secondary battery, comprising:

the positive electrode according to any one of claims 1 to 7;
a negative electrode; and
a non-aqueous electrolyte.

# Figure 1

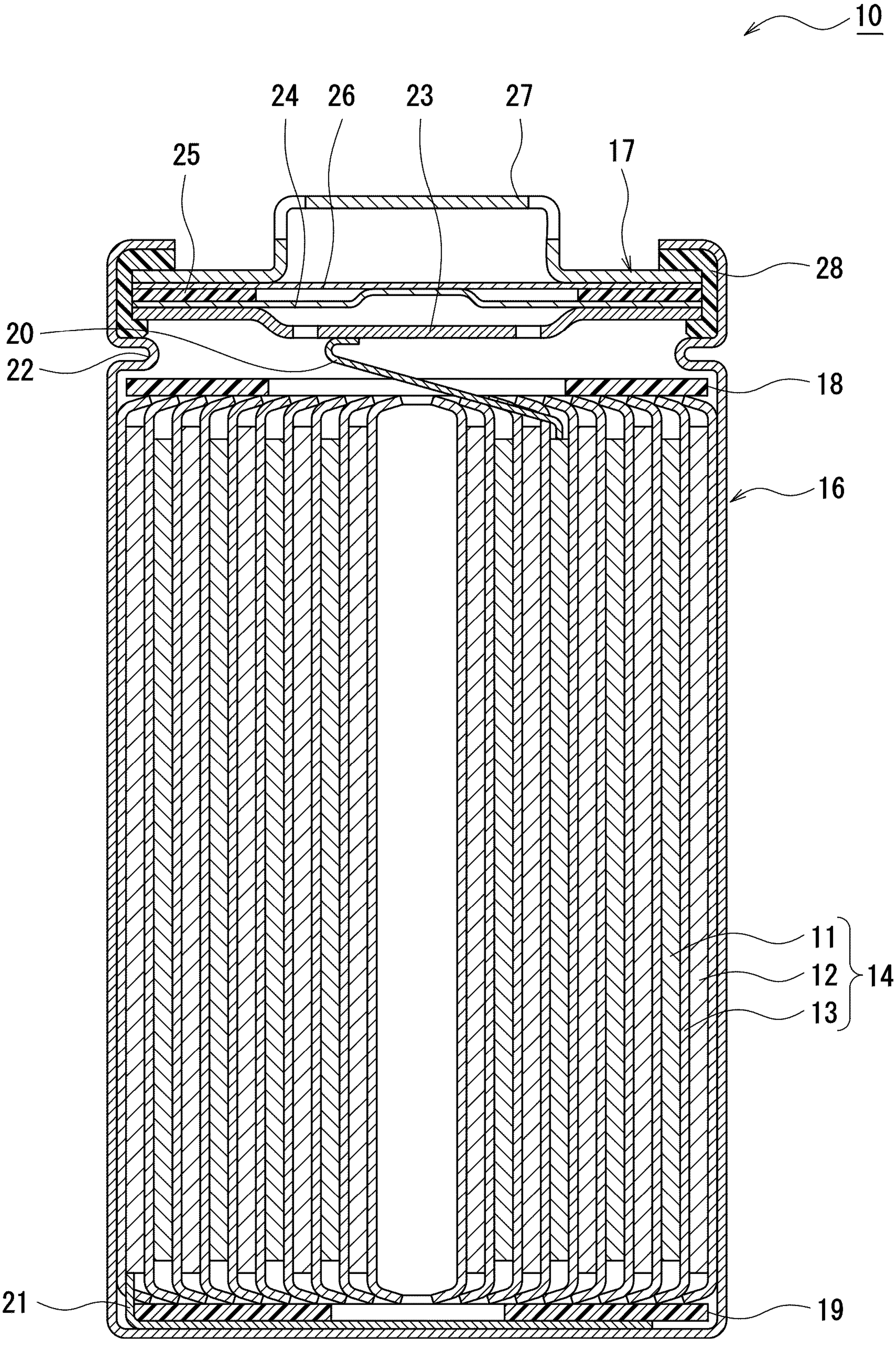

Figure 2

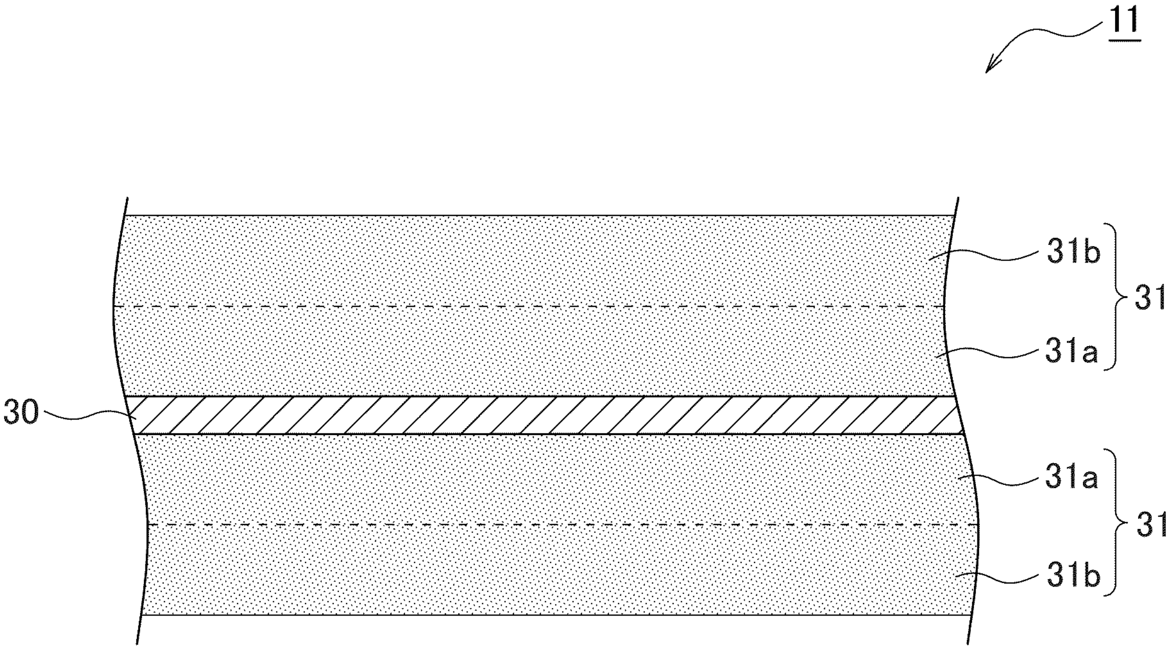

**INTERNATIONAL SEARCH REPORT**

International application No.
**PCT/JP2024/017592**

**A. CLASSIFICATION OF SUBJECT MATTER**

***H01M 4/131***(2010.01)i; ***H01M 4/36***(2006.01)i; ***H01M 4/505***(2010.01)i; ***H01M 4/525***(2010.01)i; ***H01M 4/62***(2006.01)i
FI: H01M4/131; H01M4/36 C; H01M4/525; H01M4/505; H01M4/62 Z

According to International Patent Classification (IPC) or to both national classification and IPC

**B. FIELDS SEARCHED**

Minimum documentation searched (classification system followed by classification symbols)

H01M4/131; H01M4/36; H01M4/62; H01M4/505; H01M4/525

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2019-169286 A (TDK CORPORATION) 03 October 2019 (2019-10-03) paragraphs [0007]-[0008], [0098]-[0099], [0105], [0107], example 15, tables 1, 3 | 1-8 |
| Y | JP 2022-149660 A (TDK CORPORATION) 07 October 2022 (2022-10-07) claim 1, paragraphs [0006]-[0009], [0069]-[0071], example 1 | 1-8 |
| Y | JP 2020-510980 A (LG CHEM, LTD.) 09 April 2020 (2020-04-09) paragraphs [0009], [0028], [0043] | 4 |
| Y | JP 2015-043257 A (PANASONIC CORPORATION) 05 March 2015 (2015-03-05) paragraphs [0009], [0029], [0039], example 1 | 5 |
| A | JP 2009-187940 A (SONY CORPORATION) 20 August 2009 (2009-08-20) claims | 1-8 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 July 2024** | **30 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/017592**

| Patent document cited in search report | Publication date (day/month/year) | Patent family member(s) | Publication date (day/month/year) |
|---|---|---|---|
| JP 2019-169286 A | 03 October 2019 | (Family: none) | |
| JP 2022-149660 A | 07 October 2022 | (Family: none) | |
| JP 2020-510980 A | 09 April 2020 | US 2020/0067071 A1<br>paragraphs [0009], [0033], [0049]<br>WO 2019/093836 A1<br>EP 3637506 A1<br>KR 10-2019-0053130 A<br>CN 110462885 A | |
| JP 2015-043257 A | 05 March 2015 | (Family: none) | |
| JP 2009-187940 A | 20 August 2009 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019169286 A